**Europäisches Patentamt**

**European Patent Office**

**Office européen des brevets**

(11) Publication number: **0 165 734 B1**

## EUROPEAN PATENT SPECIFICATION

(45) Date of publication of patent specification: **15.07.92**

(51) Int. Cl.⁵: **G06K 9/62**, G07D 7/00

(21) Application number: **85303863.6**

(22) Date of filing: **31.05.85**

(54) **Production of an image model and inspection of a pixel representation of an image.**

(30) Priority: **22.06.84 GB 8415996**

(43) Date of publication of application:
**27.12.85 Bulletin 85/52**

(45) Publication of the grant of the patent:
**15.07.92 Bulletin 92/29**

(84) Designated Contracting States:
**AT BE CH DE FR GB IT LI LU NL SE**

(56) References cited:
**EP-A- 0 032 592**
**GB-A- 2 038 063**

(73) Proprietor: **THE GOVERNOR AND COMPANY OF THE BANK OF ENGLAND**
**Threadneedle Street**
**London EC2R 8AH(GB)**

(72) Inventor: **Kelly, Bruce**
**7 Hoestock Road**
**Sawbridgeworth Hertfordshire CM21 6DY(GB)**

(74) Representative: **Horton, Andrew Robert Grant et al**
**BOWLES HORTON Felden House Dower Mews High Street**
**Berkhamsted Hertfordshire HP4 2BL(GB)**

## Description

### FIELD OF THE INVENTION

The present invention relates to the inspection of images and the production of signal representations of images. One aspect of the invention relates to the inspection of an image pixel for tolerable correspondence with a master image pixel represented in signal form and more particularly concerns the examination of an image, particularly the image of a document or object as represented in pixel form, and testing of the image pixels derived from the document or object. Another aspect of the invention concerns the production of an image model, represented in signal form, of an image, particularly of a document or object intended to be used as a master against which a large number of documents or objects are to be compared for acceptability. A further aspect of the invention concerns apparatus for performing the testing of documents or objects using a signal model of a master image. The invention is intended to be particularly suitable, though not confined to, the examination by machine of sheet-like objects such as printed documents, for example bank-notes or security documents, and may be used for the inspection of sheets generally, irrespective of the presence or absence of information on the sheets. The invention is also applicable to the examination of, for example, two-dimensional images of (three-dimensional) industrial components.

### BACKGROUND TO THE INVENTION

Although, as just previously mentioned, the invention is not in its broad aspect necessarily confined to the examination of bank-notes, it is convenient to outline the problems giving rise to the present invention with respect to that particular application of the invention, since the existing problems which the present invention is intended to solve or at least alleviate are particularly acute in relation to bank-notes.

Bank-notes are printed by a variety of printing processes which are necessarily complex. Bank-notes are not necessarily exactly the same yet the implementation of the limits of acceptability may vary according to the individual examiner. Owing to the inherent variations of printing processes, it is, as will be further explained hereinafter, particularly difficult to mechanise the process of examination owing to the difficulty of formulating an absolute criterion of acceptability of a bank-note using, for example, a master note which is agreed to constitute a perfect specimen. Another quite general problem is the variation even over the area of a bank-note of a criterion of acceptability. For example, what may be reckoned to be unacceptable in one region of a bank-note may be acceptable in another. One convenient example is that a particular imperfection occurring in the face of a Head of State or other person represented on a bank-note may reasonably be regarded as unacceptable whereas an imperfection of the same order of magnitude but occurring in some border region of the bank-note may be regarded as an acceptable imperfection. The variation in a criterion of acceptability may also occur in relation to, for example, industrial components of which particular dimensions must be made to a smaller tolerance than is acceptable in other dimensions.

A further difficulty in the development of a machine technique for the examination of bank-notes lies in the variability of the media which are used for their production. The paper may shrink or stretch and the printing medium, for example ink, may vary in consistency or density. All these factors produce minor variations which may in general be tolerable to the human eye, depending on where they occur, but represent severe difficulties in the development of a technique for examination of a bank-note by automatic means. In general, of which the foregoing are particular examples, if a machine is capable, as has been thought necessary hitherto, of resolving the finest detail in the bank-note then the more prone it is to the indication of imperfection even when imperfection is tolerable.

These various problems are accentuated if any attempt is made to examine by machine a large number of bank-notes individually and in particular in which is usually termed an "on-line" manner, that is to say when the examination of a bank-note is to be performed within the time interval between the presentation of successive bank-notes at some stage in the cycle of production thereof. The information content of a bank-note examined to a reasonable degree of resolution is very considerable and the development of a machine technique for the examination of bank-notes for acceptability is made difficult by the very high information rate at which a machine must operate if it is to be used "on-line".

### BRIEF SUMMARY OF THE PRIOR ART

One technique for detecting, for example, printing flaws on a printed sheet by comparison with a reference sheet is to develop from the reference sheet a representation in the form of pixels, for example by controlled scanning of the reference sheet and to scan the printed sheet similarly to develop a like plurality of pixels so that each document pixel can be compared with each reference sheet pixel. However, such a technique will suffer from all the difficulties noted in the foregoing.

European Patent Application No. 0084137 discloses an apparatus for detection of flaws in currency having multiple registered images. Optical means scan a test note to provide a plurality of outputs each representative of a particular patch value of a particular scan line of the test note. Generating means provide a plurality of outputs each representative of a particular patch value of a particular scan line of a reference note which is generated in real time as the test note is scanned. The generating means includes means to ensure that each generated reference patch value is provided for comparison with the corresponding patch value of the test note. Each reference patch value is generated for any value of misregistration between the multiple images within a predetermined tolerance. However such an apparatus requires very great computing power and is unnecessarily complicated by the computation of the degree of misregistration of multiple images.

Other proposals for testing images are described in British Patent Specifications Nos. 1575607, 2038063, 2035549, 2035551 and 2105030 and French Patent Specification No. 2349862.

It may conveniently be mentioned at the present stage that the scanning of a sheet or document to produce a pixel representation thereof for comparison with a pixel representation of a master sheet or document is rendered complex by the practical impossibility of ensuring that every document is presented in exactly the same manner to a scanning instrument and in general there will be a translation error and a skew error in the scanned image. However, methods exist in computer graphic techniques for resolving both kinds of error and the present invention is not therefore concerned with or dependent on any particular technique for curing translation error or skew error in the scanning of a document or image. The aforementioned GB-PS 2035551 describes one form of skew correction system.

## SUMMARY OF THE INVENTION AS CLAIMED

In one aspect the invention provides a method of representing in signal form an image composed of pixels, comprising, for each of a multiplicity of selected pixels of the image, defining a matrix composed of respective pixels in the neighbourhood of the selected pixel; providing a first signal value when all said respective pixels have a pixel value within a predetermined range; and providing a second signal value when at least one of said respective pixels has a pixel value outside said range, so as to obtain an array of signal elements each representing the signal value of the matrix defined for a selected pixel.

The method may further comprise developing a plurality of arrays of signal elements, wherein the signal values are determined in each array according to a respective one of a plurality of different ranges of pixel values.

The method may be reiterated to develop at least a second array of signal elements from a previous array.

In another aspect the invention provides a method of developing a signal model of an image composed of pixels, each pixel having a pixel value, comprising: defining a multiplicity of different ranges of said pixel value; defining, for each selected pixel, a matrix composed of pixels in the neighbourhood of the selected pixel; testing the value of each selected pixel against at least one of the multiplicity of ranges; and establishing in respect of each selected pixel and in respect of each of said ranges a first signal value if all the pixels in the respective matrix have pixel values within the said range and a second signal value if at least one of said pixels in the respective matrix has a pixel value outside said range, so as to provide a multiplicity of arrays of signal elements, each array being established for a respective one of said ranges and each comprising a plurality of signal elements each one of which has the signal value determined for the matrix defined for a respective selected pixel.

The pixel value preferably represents brightness and the said ranges may extend in combination over a complete range of brightness values.

In another aspect the invention provides a method of comparing a secondary image composed of secondary image pixels with a master image represented by master image pixels, comprising: defining for each selected master image pixel a predetermined range of pixel values; providing for each selected master image pixel a gating signal which indicates whether or not the values of all the master image pixels in a respective defined neighborhood of the selected master image pixel fall within the said range; and testing under the control of the gating signal the pixel value of a secondary image pixel against limits corresponding to the said range.

The method of comparing may further comprise defining a multiplicity of different ranges of values of said pixel; providing, for each of said ranges, an array of gating signals each of which denotes whether the values of all the master image pixels in a respective neighborhood of a respective selected master image pixel fall within the respective range, and testing under the control of the gating signals the values of secondary image pixels against limits corresponding to at least one of the ranges.

Preferably a comparison of the value of a secondary image pixel with limits corresponding to a particular range is permitted only if the respective gating signal denotes that the values of all the master image pixels in the respective neighborhood fall within that particular range.

The invention also provides in another aspect apparatus for comparing a secondary image composed of secondary image pixels with a master image represented by master image pixels, comprising: means which provide a signal representation which indicates for each selected master image pixel whether the values of all the master image pixels in a respective defined neighborhood of the selected master image pixel fall within a defined range; and comparison means for testing the value of a secondary image pixel against limits corresponding to the said range.

The signal representation may comprise arrays of gating signals each of which denotes whether the values of all the master image pixels in a respective neighborhood of a respective selected master image pixel fall within a respective range, and the comparison means may be responsive to the gating signals to test the value of a selected secondary image pixel against limits corresponding to at least one of the ranges.

The comparison means may permit comparison of the value of a secondary image pixel with limits corresponding to a particular range only if the respective gating signal denotes that the values of all the master image pixels in the said respective neighborhood fall within that particular range.

The array of gating signals may comprise for each selected master image pixel a digital signal composed of a plurality of signal elements each of which is associated with a respective predetermined range and has a first signal value when the respective master image pixel has a value within the respective range and a second signal value when the respective master image pixel does not have a value within the respective range.

## EXPLANATION OF THE INVENTION

At the heart of previous approaches to the problem of scanning an image for acceptability having regard to a master image is the idea that one should consider the master image as perfect and consider the effect of aberrations relative thereto. However, the basis of the present invention lies in the idea of aberrating a master image in a manner which can provide a tolerance in acceptability better approximating to that applied by the human eye and which can be varied at will to provide acceptability criterian which can vary over a given image.

One aspect of the present invention concerns the preparation of a model of a master image in signal form and, broadly speaking, the present invention provides, according to this aspect of the invention, a method of representing, in signal form, a given pixel of an image, composed of a multiplicity of pixels, comprising defining a matrix composed of a multiplicity of pixels in the neighbourhood of the said given pixel; providing a first signal value when all said multiplicity of pixels have a brightness value (which may be a grey scale value) within a predetermined range of brightness values; and providing a second signal value when at least one of said pixels has a brightness value outside the aforementioned range. In effect this permits the testing of the brightness value of a selected pixel in a subsequently scanned image for correspondence with a predetermined range of brightness values common to a respective matrix of pixels defined in the neighbourhood of a master image pixel rather than testing pixel against pixel. As will become apparent from further explanation herein, there is a considerable degree of choice which can be exerted over the extent and configuration of the matrix of pixels which is used to represent a given pixel and over the range of brightness values which is selected for association with the matrix of pixels. This permits a considerable degree of variation in an acceptability criterion.

In practice, since a master image is composed of a multiplicity of pixels, this aspect of the present invention envisages performing the aforementioned method so as to obtain an array of signals (preferably binary) values each representing the (binary) value of the matrix defined for a respective pixel. It will be appreciated that the term "array" is primarily intended to mean a set of values which can be arranged in appropriately ordered form; one advantage of this form of representation is the ease with which it can be stored and, as will be seen hereinafter, a particular convenience in a preferred manner of examining a scanned image.

Preferably, this aspect of the invention includes the development of a plurality of arrays of binary values in respect of the same pixel matrices, wherein the binary values are determined in each array by a respective one of a plurality of different ranges of brightness values. According to this manner of representation of an image, such as an image of a master document, there is defined for each pixel a matrix of pixels in the neighbourhood thereof and the aforementioned arrays provide, in effect, a digital word of which the bits which are of one particular value (conveniently 1) indicate that all the pixels in the defined matrix have brightness values within the same respective range of brightness values; the data bits that are of the other binary value (0) indicate that, for the respective range of brightness values, at least one pixel in the respective matrix has a brightness value outside that range. Thus each pixel in a master image is represented not directly by its brightness value but by a form of representation which defines, in effect, a region, of controllable extent, of tolerable variation of a pixel in terms of position or brightness relative to a nominally corresponding master pixel. The benefits of such a representation are particularly obtained if the various ranges of brightness values extend, in combination, over a whole range of brightness values from a defined zero to a defined maximum, such as from 0 to binary 255 of a grey scale as normally expressed in 8-bit binary digital form, and it is also advantageous to allow each range to overlap a neighbouring range or ranges, but such is not essential to the invention in its broadest form.

The development of the signal model of a master image need not be direct or confined to a single stage. In particular the process of defining a pixel matrix may be reiterated at least once using the same or a different definition of neighbourhood to derive a final array of signal values. Moreover, the reversal of the matrix definition (so that "black" becomes "white" and vice versa) may be useful in some circumstances. In a second or subsequent reiteration each matrix may be defined with respect to a group of the original master image pixels.

The production of an image model of a master image or document in the manner previously set forth according to the invention may be, and in general is likely to be, a comparatively time consuming process, but this is of no great importance if, as is usual, the representation thereby produced is to be used as a master for testing a very great number of object images and thereby for the testing of a very large number of, for example, printed documents against a presumed standard or master document.

The significance of this aspect of the invention lies not in comparing a pixel value with the value of a master pixel or combination of master pixel values but in the comparison of the value of a selected pixel with a predetermined range of values common to a respective matrix of pixels defined in the neighbourhood of one or a group of the master image pixels. For the testing of a complete image or document, the testing of each individual pixel may be repeated for each of a multiplicity of pixels in a scanned image and providing signal indications of the occasions of non-correspondence of the value of a tested image pixel with the range with which it is compared. Preferably the brightness value of a selected pixel is tested, preferably simultaneously, with each of a plurality of ranges of brightness values common to the respective matrix. It will be noted that where, as previously mentioned, each master pixel is represented by a digital word of binary values which indicate whether all the pixels in the respective matrix fall within the respective range of brightness values or not, the digital word can be used to provide gating for simultaneous comparison of the brightness value of a pixel against the appropriate multiplicity of brightness ranges. This permits in fact the complete testing of a scanned image pixel value in real time and thus, provided that, as is currently possible, a document can be scanned sufficiently rapidly, the ensuing circuitry for testing the pixel values can readily be arranged to operate at a similar rate so that the method of testing proposed herein can conveniently be used for "on-line" examination at the rate of production of the objects such as bank-notes or other documents.

However, the method of testing proposed herein is of more general utility, since irrespective of its applicability in such "on-line" examination, the method of testing employing the particular form of representation of the master image or document substantially alleviates the difficulties generally noted previously herein.

## BRIEF DESCRIPTION OF THE DRAWINGS

Figure 1 is a schematic representation of the scanning of a web of printed matter;
Figure 2 illustrates a typical method of illumination of the web;
Figure 3 is an explanatory diagram showing a target pixel in a neighbourhood of pixels;
Figures 4A, 4B and 4C illustrate various forms of pixel matrices as proposed in the present invention;
Figure 5 illustrates, for explanatory purposes only, a set of arrays of matrix values;
Figure 6 illustrates schematically an apparatus for the scanning and testing of a printed document employing a special representation of a master document in signal form;
Figure 7 illustrates a detail of a comparison circuit constituting the preferred embodiment of a discrepancy detector in the apparatus shown in Figure 6; and
Figure 8 is a flow diagram illustrating a preferred method of testing.

## DESCRIPTION OF A PREFERRED EMBODIMENT

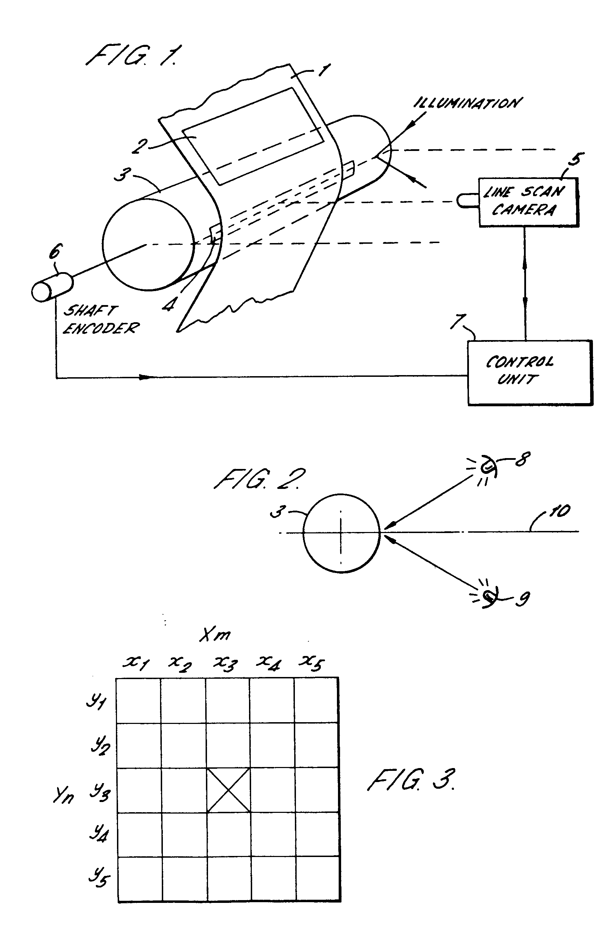

Figure 1 illustrates, by way of example only, a sheet constituted by a continuous web 1 on which, normally at closely spaced intervals, is printed a multiplicity of documents, for example, bank-notes. So far as the present invention concerns the testing of bank notes, it would normally be performed at a late stage in the production process after the bank-notes have been printed but before they are separated from each other by the severing of the common web of paper on which they are printed. However, other techniques of presentation (e.g. as separate sheets) are feasible.

The web 1 is passed, normally at high speed, round a roller 3 and the web is scanned along a transverse region 4 by means of a line scan camera 5, which may be of known form. In general, although in the broadest aspect of the invention a television camera or an appropriately modified form thereof may be used for scanning a document to provide, after preferably analogue-to-digital conversion of the output of the television camera, a pixel representation of the document which is scanned, in general a camera scanning at a television rate is far too slow for the preferred use of the present invention and a high speed line scan camera would be used.

It is, normally, necessary to provide appropriate synchronisation of the scanning by the camera with the transport of the web 1 and for this purpose the apparatus shown in Figure 1 includes a shaft encoder 6 providing information on the instantaneous circumferential position of the roller 1 to a synchronisation control unit 7. Since the control of a line scan in this way is a known technique, and the particular method employed is not critical to the present invention, it will not be described further herein.

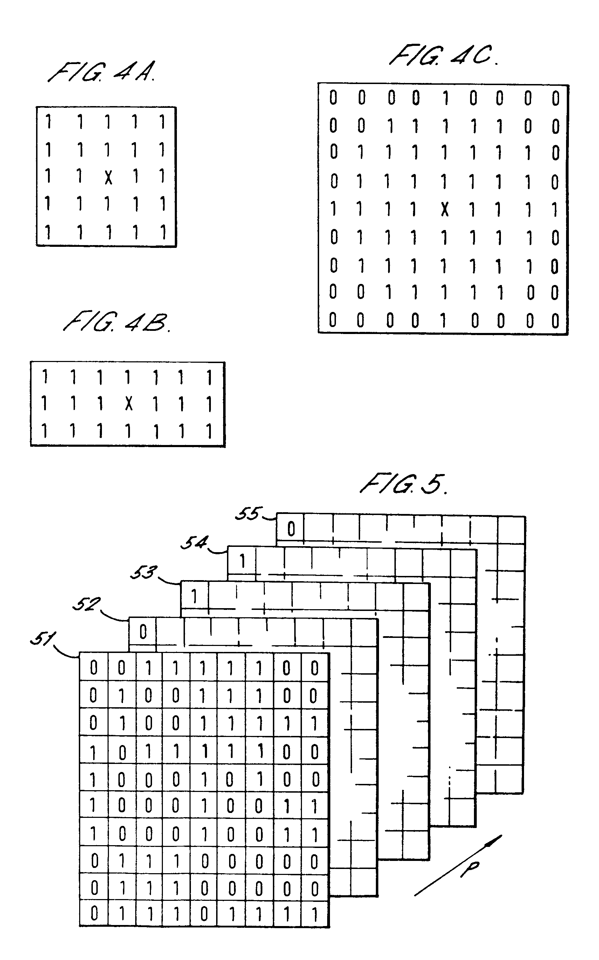

Figure 2 illustrates merely by way of example a preferred illumination of the region which is scanned; the illumination preferably consists of lamps 8 and 9 equally laterally displaced from a scanning plane 10 normal to the periphery of the roller 3.

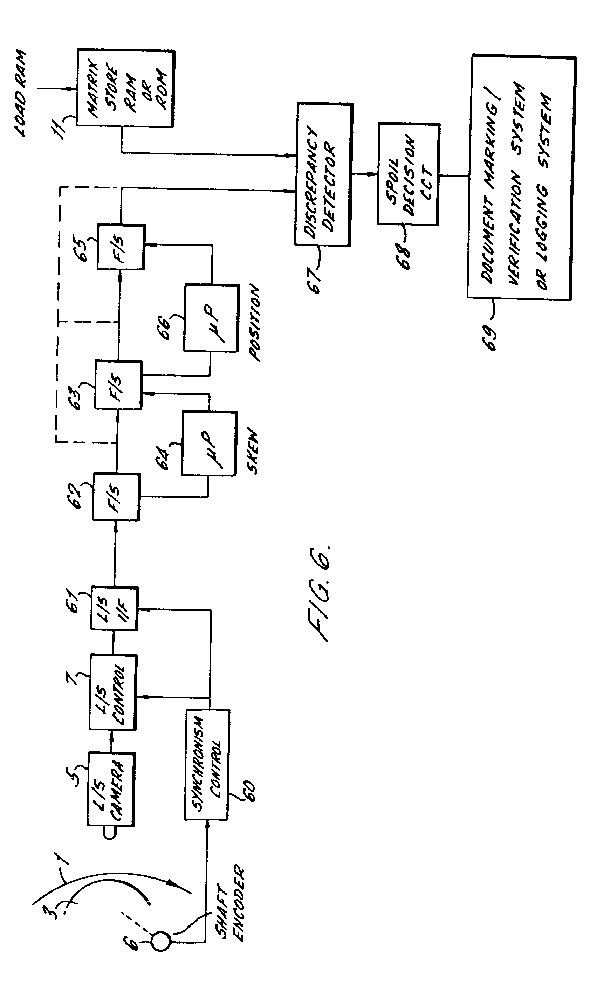

It will be presumed that for the performance of the present invention so far as testing is concerned the line scan camera or other scanning means can provide a representation of the scanned document in the form of a multiplicity of picture elements (pixels) each of which has a pixel value representing brightness (i.e. reflectance, density or other parameter of the pixel) corresponding to an elementary picture area of the scanned document. Preferably, though not essentially, the pixel value is expressed in the form of a digital word of eight bits, so that the pixel value is expressed in terms of a grey scale extending from zero, representing absolute black to 255, representing white. However, other total ranges of brightness values can be employed instead if preferred. Before Figure 3 is considered, it may be assumed that a master document, that is to say a document such as a banknote which, for the purpose of testing other banknotes is presumed to be perfect, notwithstanding the probability that it will have minor imperfections, is scanned to provide a multiplicity of pixels each representing an elementary area thereof. Although in general the pixel values would be stored in retrievable locations in a memory device such as a frame store, and the positions of the pixel values in the frame store would be determined primarily by the convenience of storage or retrieval, for the purpose of explanation Figure 3 illustrates a small neighbourhood of pixels in the locations of the corresponding elementary areas of the image or document that is scanned to provide the pixels. Figure 3 shows purely for the sake of example, a 5 x 5 matrix of pixels, each element in the array being the pixel $(x_m, y_n)$ where m can have any value from 1 to 5 and n can have any value from 1 to 5. As will be seen, the choice of a square matrix is purely for the purpose of explanation and it is not essential even to choose a rectangular matrix.

Let us suppose that the given pixel which it is desired to represent is the pixel $(x_3, y_3)$. On the assumption that sufficient speed of data handling could be achieved, then in the absence of aberration, this pixel could be compared with a pixel in exactly the same position in a scanned image. However, as noted previously, printing aberrations, dimensional changes of paper and other aberrations mean, in general, that the corresponding pixel in the tested document could actually occur in any one of the element positions of the 5 x 5 matrix shown in Figure 3.

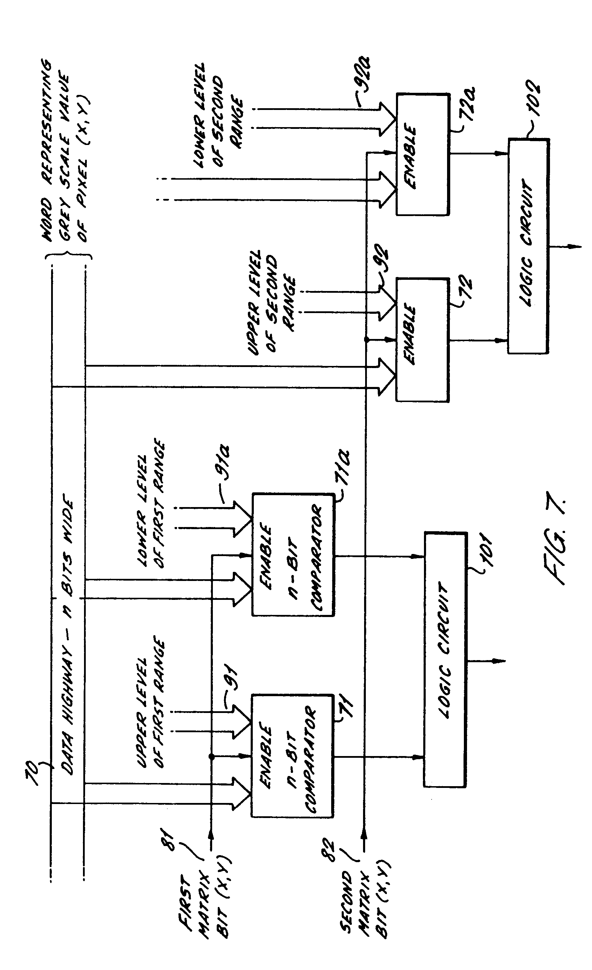

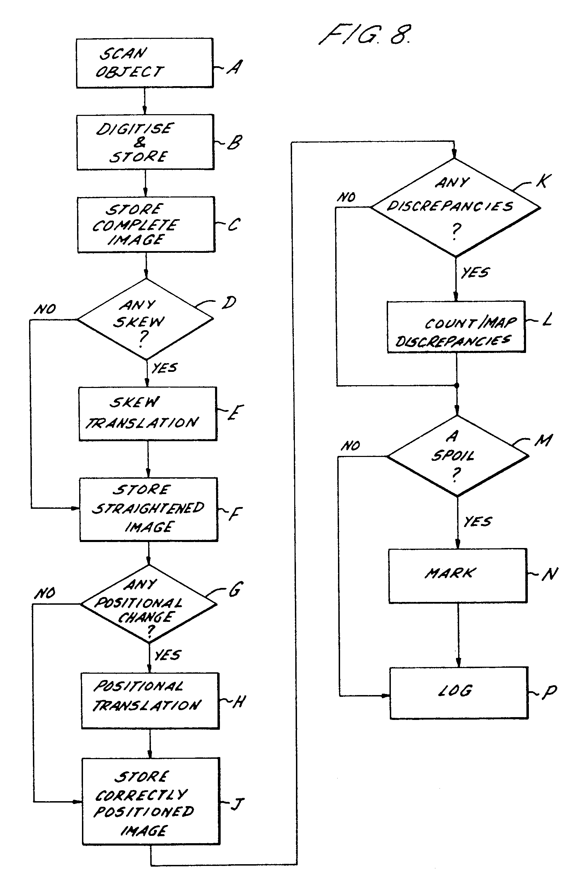

As noted previously, one aspect of the present invention consists in defining, for each target or given pixel, a matrix of pixels, such as the matrix shown in Figure 5, in the neighbourhood of the target pixel. The dimensions of the matrix and thus the particular configuration of pixels which is chosen to represent the given pixel may be chosen to suit the characteristics of the media, the printing technology or other factors in the production of the document which is being examined.

It is, for example, common to find that in the printing of a document the paper stretches more in one direction than the other and thus the aspect ratio of the matrix used for the representation of the given pixel may be chosen accordingly. Moreover, the size or configuration of the pixel can be varied within a given "master image" in the event that the criteria of acceptability vary over the area of the image.

In general, any element in the matrix can be made a null; this constitutes a prohibition on the occurrence of a target pixel at the respective locations.

In Figure 4 are shown three examples of different matrix representations, which can conveniently be called aberration patterns since they define an acceptable configuration or pattern of a tolerable aberration in the tested image even though the aberration is represented as occurring in the master image. Figure 4A illustrates a 5 x 5 matrix with the target pixel (X) at the centre; the other elements in the matrix are shown as "1" merely to indicate that they are present in the defined matrix. Likewise, Figure 4B illustrates a 7 x 3 matrix. Figure 4C illustrates a matrix which is based on a 9 x 9 square matrix but is a development according to which various peripheral elements of the 9 x 9 matrix are assigned a null value so that the remaining elements define an approximately circular matrix or neighbourhood around the target pixel X. Various other suitable patterns can be devised according to preference.

It will be understood that if any given pixel has or should have any particular grey scale value, there is for the corresponding pixel derived from scanning the tested document a probability that the pixels within a given range or neighbourhood will have brightness values within a finite range, the probability density being a function of both the x and y directions in Figure 3. The choice of matrix and range of values associated therewith may be selected in accordance with the presumed or permissible spread of the probability function. It is not thought necessary here to justify the basis of the present invention in terms of a mathematical analysis; nevertheless it is appropriate to say that the choice which the invention provides of varying the area and shape of the matrix of pixels chosen to represent the given pixel and the choice of brightness or grey scale range to be associated with that matrix provides a powerful technique for determining the limits of tolerable aberration of a master image.

It would be possible to develop a mathematical model, in signal form, by developing for each selected pixel a respective matrix and a single respective range of values in accordance with the criterion of acceptability appropriate for the given pixel. The range of values could vary from matrix to matrix so that it comprised a range of values embracing the measured value for the given master pixel. For example, one pixel measured in the master matrix to have a grey scale value of 120 may be represented by an m by n matrix, where m and n are selectable and the range associated with that matrix could vary from grey scale value 115 to 125. In another part of the image a pixel measured to have a grey scale value of 85 could be associated with a matrix for which the range extends from 80 to 90 or perhaps from 75 to 95, according to preference. However, though in some circumstances this may provide an acceptable technique, it is more convenient and more beneficial in terms of high speed processing to adopt the technique about to be outlined.

In a development of the technique just described, a matrix is defined for each master pixel and, by means of scanning a master document the measured brightness or grey scale value is determined for each selected master pixel. Then a multiplicity of ranges of brightness or grey scale values is defined. These ranges preferably, though in general need not, extend throughout a complete range of brightness or grey scale values. For example, a first range may extend from grey scale values 0 to 20. A second range may extend from grey scale value 15 to 35. A third range can extend from grey scale value 30 to grey scale value 50 and so on. Preferably as just stated the grey scale or brightness ranges overlap. Then, for each selected pixel there is by consideration of the brightness or grey scale values of all the pixels in the neighbourhood constituted by the defined matrix a determination of whether all the pixel values fall within each of the defined ranges. If for any given range this condition holds, the matrix can be represented by a particular signal value, conveniently a single bit binary value which is preferably chosen as a 1. For any range for which the condition does not hold, the respective value allotted to the matrix for that given range of values will be another signal value, preferably 0. In this manner one may develop, for each range of values, a respective array of signals which are composed of, preferably, ones and zeros. This is shown purely schematically in Figure 5. It will of course be understood that each set of values is merely a collection of individually addressable signals but the representation is convenient for purposes of explanation.

Thus, in greatly simplified form since in general the number of ranges is to be much greater than five and the number of pixels far greater than shown in Figure 5, the entire master document may be represented by a plurality of arrays 51 to 55 of signals, preferably binary signals. Each element of the array shows the binary signal value attributed to a respective matrix associated with a respective master pixel, the binary value being 1 if all the pixel values in that matrix fall within the respective defined range of brightness values associated with that array. Each array, conveniently called a "gating array", has elements relating to the same defined matrices as the other arrays but differ from each other according to whether the pixels in each defined matrix all have brightness values falling within the respective range of values associated with the respective array.

As previously mentioned, the development of the arrays may be reiterated to provide final arrays for representing the signal model of the master image.

It may therefore be seen that for any given pixel there is a defined matrix which is associated with a set of values, preferably a binary digital word of which the bits are each represented in a respective one of the gating arrays. The binary word associated with the matrix values occupying the top left-hand position in each array is shown as 00110. This means that all the pixels in the respective matrix have brightness values which fall within the two ranges of brightness values respectively associated with the arrays 53 and 54 and do not have brightness values which fall within the three ranges of brightness associated respectively with the arrays 51, 52 and 55.

It is, of course, necessary to perform substantial computation on the obtained pixel values of a master document in order to produce the representation in signal form illustrated purely schematically in Figure 5. Nevertheless, the technique is particularly useful because the process need only be performed once whereupon an image model of the master document is available in convenient form for extensive subsequent use in testing documents in large quantities against the image model representing the standard document.

Although it is presumed in the foregoing that the gating arrays shown in Figure 5 are developed by firstly scanning a master document and thereafter performing the computing required to produce the binary representations of all the defined matrices for all the defined ranges of grey scale values, it may be possible to produce the gating arrays directly without using scanning. This could obviously be done for very simple cases though currently is not reckoned to be practical for a complex image.

An important advantage of the use of a multiplicity of arrays of signal values to represent the matrices associated with master pixels and thereby to represent the individual pixels lies in the ability to test a pixel from a tested document very rapidly using a plurality of comparators each set for the range of values associated with a respective gating array and making a multiplicity of simultaneous comparisons of the brightness value of the pixel by means of the comparators which are gated to make the comparison only if the binary value for the particular range indicates that all the pixels defined for that matrix have brightness values within the respective range. Thus the operation required for testing a given pixel obtained by scanning a document under test need consist only of reading out the respective digital word from a memory storing the "gating arrays" and feeding the pixel value word simultaneously to a multiplicity of comparators each controlled by a respective bit of the matrix data word and each set to compare the pixel value with the range of values appropriate for the respective array of binary matrix values. It is convenient to inhibit (i.e. prevent or disregard) the comparison whenever the data bit indicates that no comparison is meaningful, that is to say when for example the respective data bit is a zero as explained with reference to Figure 5.

The technique thus described makes possible, if desired, the examination of pixels in real time provided only that the comparison circuitry can perform at the pixel rate provided by a scanning device for the tested document. This in turn means that the technique of examination can be performed without requiring excessive speed or storage capacity.

Figure 6 illustrates again schematically an apparatus for performing examination of printed documents by a technique as just described.

In the apparatus shown in Figure 6 is included a matrix store 11 which may be in the form of a random access memory which is loaded with signals constituting a multiplicity of gating arrays as schematically shown in Figure 5. It will be understood that the matrix store must be capable of reading out, for each pixel obtained from scanning a document under test, the digital word for the corresponding matrix defined for the nominally corresponding pixel in the master document or image. However, this is a matter of known computing technique and need not be described further herein.

Figure 6 includes the web 1, the drum 3, the line scan camera 5, the shaft encoder 6 and the line scan control 7 as previously described with reference to Figure 1. The set of pixels obtained by scanning a printed document on the web 1 is fed through a line scan interface, which may be of known construction, to a frame store 62. Such a frame store may be constructed on the same lines as for a frame store used in digital television processing but in general will differ therefrom only by possessing a larger capacity.

As briefly indicated hereinbefore, it is practically impossible to ensure that a document presented for scanning is presented in exactly the correct aspect or position and the apparatus shown in Figure 6 includes a frame store 63 with controlled coupling to the frame store 62 by means of a microprocessor 64 and a further frame store 65 with controlled coupling to the frame store 63 by means of a microprocessor 66. The microprocessors 64 and 66 in conjunction with the frame stores 63 and 65 are provided in order to correct the image of the document as obtained by the line scan camera for skew and translation errors. Also as previously mentioned, this operation, though important, is not part of the inventive concept of the present invention and since computer graphical techniques exist for the correction of skew and translation errors and will therefore be familiar to those skilled in the art, they will not be further described herein.

In order to test each selected pixel, which in general will be all the pixels for the given document but could be merely a selection of pixels therefrom, each pixel or selected pixel is read out from the frame store 63 in synchronism with the reading out of the respective digital word from the matrix store 11. Figure 6 does not show, purely for the sake of convenience and simplicity of explanation the timing circuits necessary for ensuring synchronism but, once again, such techniques are known to those skilled in the art and do not need further description herein.

Thus each pixel value is fed together with a respective data word from a matrix store 11 to a discrepancy detector 67 which is coupled to a spoil decision circuit 68 coupled to a system 69 which will be described later.

The operation of the system of Figure 6 follows the flow chart shown in Figure 8; the discrepancy detector 67 in Figure 6 will be described later with reference to Figure 7.

With reference to Figures 6 and 8, the object, in this embodiment in sheet form, is scanned one line at a time (step A in Figure 8) by the line scan camera when synchronism with the object's movement has been established by means of a synchronism control 60 (which may be in known form). This line of information is digitised and stored (step B in Figure 8) by the line scan control 7 and line scan interface 61. The process is repeated until the line scan interface is filled with a predetermined number of lines. The actual number of lines would be determined by the resolution required to achieve the level and degree of inspection accuracy required.

When the line scan interface 61 has been filled, the complete frame of data (i.e. the digitised image of the object) is passed to the frame store 62 (step C). Upon completion of this process the line scan control and line scan interface are (in known manner) made ready to capture an image of the next object. During the capture of the image of the said next object, the digitised image in the frame store 62 can be interrogated for any skew in the image (step D). When the line scan interface is ready with the next image, as it transfers that image to the frame store 62 the latter's previous contents can be transferred (step F) to the frame store 63, the transfer taking into account (step E) any skew that has been detected in the image.

The contents of frame store 63 can now be interrogated (step G) for any positional changes within the image and when frame store transfer takes place the contents of frame store 63 can be transferred (step J) to frame store 65 taking any positional change into account (step H).

The contents of the frame store 65 can now be compared with the contents of the matrix store 11 by means of the discrepancy detector 67 (step K). Detected discrepancies can then be counted and/or mapped on a context basis by decision circuit 68 (step L) and at the completion of the cycle of examination the system makes a decision (step M), in accordance with the count of discrepancies, whether the object is "spoiled". Any such decision is passed to the marking and logging system 69 which may provide physical marking (step N) on any spoiled object and logging (step P) of such marking.

Figure 7 shows a data bus 70 on which the word representing the grey scale value of the current pixel is provided to the discrepancy detector. This data bus extends to each of a plurality of comparators 71, 71a, 72, 72a etc., (the remaining comparators being omitted), there being one comparator system (each including two comparators) for each of the gating arrays, that is to say one comparator system for each bit of the data word from the matrix store 11. To the enable input of each pair of comparators is fed the respective bit of the matrix data word from the store 11 from respective lines 81, 82 etc.

For convenience only the operation of the first comparator system need be described. The operation of the others is similar, except that the pixel value is therein compared with the respective brightness range associated with a second or subsequent bit of the matrix data word. The comparator 71 receives from any suitable source via lines 91 a digital word corresponding to the upper level of the first range, that is to say the range associated with the first gating array with which the first bit in the matrix data word is associated. Likewise, the comparator 71a receives from any suitable source via lines 91a a digital word corresponding to the lower level of the first range as aforesaid. If the respective matrix word bit is of the first binary value (i.e. 1) the comparators 71 and 71a test the (8-bit) pixel value word against the (8-bit) words corresponding to the upper and lower levels respectively of the first range and are coupled to a respective one of the output logic circuits 101, 102, etc. The logic circuit 101 provides an output of one binary value or another according to whether the grey scale value falls within the range defined by the upper level defined on the lines 91 and the lower level defined on the lines 91a or is outside the range thus defined.

The comparison of the pixel word with the respective range is inhibited if the relevant bit in the data word is of the second binary value (i.e. 0). It is alternatively possible to provide gates after the comparators so that comparison is always made but disregarded if the relevant matrix bit is 0 (using the convention previously adopted).

If for any comparison that is effectively made the comparison systems produce a signal indicating that the grey scale value of the respective pixel falls outside a range with which it is compared, the discrepancy detector provides an output to the decision circuit 68.

The decision circuit 68 may if desired accumulate a record of defects and provide an output only if the detected defects or discrepancies exceed some predetermined value but the nature of the decision circuit is not important to the present invention. It can readily be arranged in any desired manner to produce an output indicating that according to the selected criteria, the document which has been examined is defective or unacceptable and the output of the spoil decision circuit is fed, in this embodiment of the invention, to the document marking/verification or logging system 69. In addition to the marking and logging previously described, the system 69 may indicate that not only a document in a particular batch is defective but that the whole batch should be rejected; it may indicate the number of defective documents in particular batches or merely signal to a user that particular documents require further visual inspection before they can be accepted or finally rejected.

The term "sheet" is intended to include both an individual sheet and part of a continuous web.

## Claims

1. A method of representing in signal form an image composed of pixels, comprising, for each of a multiplicity of selected pixels of the image, defining a matrix composed of respective pixels in the neighbourhood of the selected pixel; providing a first signal value when all said respective pixels have a pixel value within a predetermined range; and providing a second signal value when at least one of said respective pixels has a pixel value outside said range, so as to obtain an array of signal elements each representing the signal value of the matrix defined for a selected pixel.

2. A method according to claim 1 comprising developing a plurality of arrays of signal elements, wherein the signal values are determined in each array according to a respective one of a plurality of different ranges of pixel values.

3. A method according to claim 2, in which the ranges are the same for each selected pixel.

4. A method according to any foregoing claim in which the signal values are binary.

5. A method according to any of claims 1 to 4 wherein the method is reiterated to develop at least a second array of signal elements from a previous array.

6. A method of developing a signal model of an image composed of pixels, each pixel having a pixel value, comprising: defining a multiplicity of different ranges of said pixel value; defining, for each selected pixel, a matrix composed of pixels in the neighbourhood of the selected pixel; testing the value of each selected pixel against at least one of the multiplicity of ranges; and establishing in respect of each selected pixel and in respect of each of said ranges a first signal value if all the pixels in the respective matrix have pixel values within the said range and a second signal value if at least one of said pixels in the respective matrix has a pixel value outside said range, so as to provide a multiplicity of arrays of signal elements, each array being established for a respective one of said ranges and each comprising a plurality of signal elements each one of which has the signal value determined for the matrix defined for a respective selected pixel.

7. A method according to claim 6 wherein the pixel value represents brightness and the said ranges extend in combination over a complete range of brightness values.

8. A method according to claim 7 wherein the brightness values are expressed in terms of grey scale values.

9. A method according to any of claims 6 to 8 wherein the ranges overlap.

10. A method according to any of claims 6 to 9, further comprising scanning a document to provide said pixels.

11. A method of comparing a secondary image composed of secondary image pixels with a master image represented by master image pixels, comprising: defining for each selected master image pixel a predetermined range of pixel values; providing for each selected master image pixel a gating signal which indicates whether or not the values of all the master image pixels in a respective defined neighborhood of the selected master image pixel fall within the said range; and testing under the control of the gating signal the pixel value of a secondary image pixel against limits corresponding to the said range.

12. A method according to claim 11, further comprising defining a multiplicity of different ranges of values of said pixel; providing, for each of said ranges, an array of gating signals each of which denotes whether the values of all the master image pixels in a respective neighborhood of a respective selected master image pixel fall within the respective range, and testing under the control of the gating signals the values of secondary image pixels against limits corresponding to at least one of the ranges.

13. A method according to claim 12 in which the gating signals are binary.

14. A method according to claim 12 or claim 13 in which a comparison of the value of a secondary image pixel with limits corresponding to a particular range is permitted only if the respective gating signal denotes that the values of all the master image pixels in the respective neighborhood fall within that particular range.

15. A method according to any of claims 12 to 14 wherein the pixel values represent brightness and said ranges extend in combination over a complete range from a defined zero brightness to a defined maximum brightness.

16. A method according to any of claims 12 to 15 wherein at least some of the ranges overlap.

17. A method according to any of claims 12 to 16, wherein the control of the testing of each selected secondary pixel is performed in parallel for each of the said respective ranges.

18. A method according to any of claims 12 to 17, wherein said method is performed successively for each of a multiplicity of objects each of which is scanned to provide a respective secondary image and synchronously with the production of the objects.

19. A method according to claim 18 wherein the objects are in sheet form, either separate or in the form of a continuous web.

20. Apparatus for comparing a secondary image composed of secondary image pixels with a master image represented by master image pixels, comprising: means (11) which provide a signal representation which indicates for each selected master image pixel whether the values of all the master image pixels in a respective defined neighborhood of the selected master image pixel fall within a defined range; and comparison means (67) for testing the value of a secondary image pixel against limits corresponding to the said range.

21. Apparatus according to claim 20 wherein the signal representation comprises arrays of gating signals each of which denotes whether the values of all the master image pixels in a respective neighborhood of a respective selected master image pixel fall within a respective range, and the comparison means is responsive to the gating signals to test the value of a selected secondary image pixel against limits corresponding to at least one of the ranges.

22. Apparatus according to claim 21 in which the comparison means permits comparison of the value of a secondary image pixel with limits corresponding to a particular range only if the respective gating signal denotes that the values of all the master image pixels in the said respective neighborhood fall within that particular range.

23. Apparatus according to claim 21 wherein the array of gating signals comprise for each selected master image pixel a digital signal composed of a plurality of signal elements each of which is associated with a respective predetermined range and has a first signal value when the respective master image pixel has a value within the respective range and a second signal value when the respective master image pixel does not have a value within the respective range.

24. Apparatus according to claim 23 wherein the comparison means (67) is responsive to said signal elements to permit comparison of the value of a secondary image pixel against a range when the respective signal element has the first signal value and to inhibit such comparison when the said respective signal element has the second signal value.

25. Apparatus according to any of claims 20 to 24 and further comprising means (3, 5) for scanning an object to provide the pixels of the secondary image.

26. Apparatus according to claim 24 wherein the object is one of a succession of sheets which are either separate or in continuous form and the scanning means is arranged to perform the scanning synchronously with the presentation of the sheets.

**Revendications**

1. Procédé de représentation sous forme de signal d'une image composée de pixels, comprenant, pour chacun d'une multiplicité de pixels sélectionnés de l'image, la définition d'une matrice composée de pixels respectifs dans le voisinage du pixel sélectionné ; la délivrance d'une première valeur de signal lorsque la totalité des pixels respectifs a une valeur de pixel située à l'intérieur d'une plage prédéterminée ; et la délivrance d'une seconde valeur de signal lorsqu'au moins l'un desdits pixels respectifs a une valeur de pixel située à l'extérieur de ladite plage, de manière à obtenir une série d'éléments de signal chacun représentant la valeur de signal de la matrice définie pour un pixel sélectionné.

2. Procédé de la revendication 1, comprenant le développement d'une pluralité de séries d'éléments de signal, dans lequel les valeurs de signal sont déterminées dans chaque série en fonction de l'une respective d'une pluralité de plages différentes de valeurs de pixel.

3. Procédé selon la revendication 2, dans lequel les plages sont les mêmes pour chaque pixel sélectionné.

4. Procédé selon l'une quelconque des revendications précédentes dans lequel les valeurs de signal sont binaires.

5. Procédé selon l'une quelconque des revendications 1 à 4, dans lequel le procédé est réitéré pour développer au moins une seconde série d'éléments de signal à partir d'une série précédente.

6. Procédé de développement d'un modèle de signal d'une image composée de pixels, chaque pixel ayant une valeur de pixel, comprenant : la définition d'une multiplicité de plages différentes de ladite valeur de pixel ; la définition, pour chaque pixel sélectionné, d'une matrice composée de pixels dans le voisinage du pixel sélectionné ; la comparaison de la valeur de chaque pixel sélectionné a au moins l'une de la multiplicité des plages ; et l'établissement, en ce qui concerne chaque pixel sélectionné et en ce qui concerne chacune desdites plages, d'une première valeur de signal si tous les pixels dans la matrice respective ont des valeurs de pixel situées à l'intérieur de ladite plage, et d'une seconde valeur de signal si au moins l'un desdits pixels dans la matrice respective a une valeur de pixel située à l'extérieur de ladite plage, de manière à fournir une multiplicité de séries d'éléments de signal chaque série étant établie pour l'une respective desdites plages et chacune comprenant une pluralité d'éléments de signal dont chacun a la valeur de signal déterminée pour la matrice définie pour un pixel sélectionné respectif.

7. Procédé selon la revendication 6, dans lequel la valeur de pixel représente la luminosité et lesdites plages s'étendent en combinaison sur une plage complète de valeurs de luminosité.

8. Procédé selon la revendication 7, dans lequel les valeurs de luminosité sont exprimées en termes de valeurs d'échelle de gris.

9. Procédé selon l'une quelconque des revendications 6 à 8, dans lequel les plages se chevauchent.

10. Procédé selon l'une quelconque des revendications 6 à 9, comprenant en outre l'examen d'un document pour fournir lesdits pixels.

11. Procédé de comparaison d'une image secondaire composée de pixels d'image secondaire avec une image maître représentée par des pixels d'image maître, comprenant : la définition pour chaque pixel d'image maître sélectionné d'une plage prédéterminée de valeurs de pixel ; la délivrance pour chaque pixel d'image maître sélectionné d'un signal de validation qui indique si les valeurs de tous les pixels de l'image maître dans un voisinage défini respectif du pixel d'image maître sélectionné, tombent ou non à l'intérieur de ladite plage ; et la comparaison, sous le contrôle du signal de validation, de la valeur de pixel d'un pixel d'image secondaire par rapport aux limites correspondant à ladite plage.

12. Procédé selon la revendication 11, comprenant de plus la définition d'une multiplicité de plages différentes de valeurs dudit pixel; la délivrance, pour chacune desdites plages, d'une série de signaux de validation dont chacun indique si la valeur de tous les pixels d'image maître, dans un voisinage respectif d'un pixel d'image maître sélectionné respectif, tombe à l'intérieur de la plage respective ; et la comparaison, sous le contrôle des signaux de validation, des valeurs des pixels d'image secondaire par rapport aux limites correspondant à au moins l'une des plages.

13. Procédé selon la revendication 12, dans lequel les signaux de validation sont binaires.

14. Procédé selon la revendication 12 ou la revendication 13, dans lequel une comparaison de la valeur d'un pixel d'image secondaire avec les limites correspondant à une plage particulière est autorisée seulement si le signal de validation respectif indique que les valeurs de tous les pixels d'image maître dans le voisinage respectif tombent à l'intérieur de cette plage particulière.

15. Procédé selon l'une quelconque des revendications 12 à 14, dans lequel les valeurs de pixels représentent la luminosité et lesdites plages s'étendent en combinaison sur une plage complète allant d'une luminosité définie comme nulle jusqu'à une luminosité définie comme maximale.

16. Procédé selon l'une quelconque des revendications 12 à 15, dans lequel au moins certaines des plages se chevauchent.

17. Procédé selon l'une quelconque des revendications 12 à 16, dans lequel la commande de la comparaison de chaque pixel secondaire sélectionné est effectuée en parallèle pour chacune desdites plages respectives.

18. Procédé selon l'une quelconque des revendications 12 à 17, dans lequel ledit procédé est exécuté successivement pour chacun d'une multiplicité d'objets dont chacun est examiné pour fournir une image secondaire respective et de manière synchronisée avec la production des objets.

19. Procédé selon la revendication 18, dans lequel les objets sont sous forme de feuilles, soit distinctes soit sous la forme d'une bande continue.

20. Appareil pour comparaison une image secondaire composée de pixels d'image secondaire avec une image maître représentée par des pixels d'image maître, comprenant : un moyen (11) qui délivre une représentation de signal qui indique pour chaque pixel d'image maître sélectionné si les valeurs de tous les pixels d'image maître, dans un voisinage défini respectif du pixel d'image maître sélectionné, tombent à l'intérieur d'une plage définie ; et un moyen de comparaison (67) pour comparer la valeur d'un pixel d'image secondaire par rapport aux limites correspondant à ladite plage.

21. Appareil selon la revendication 20, dans lequel la représentation de signal comprend des séries de signaux de validation dont chacun indique si les valeurs de tous les pixels d'image maître, dans un voisinage respectif d'un pixel d'image maître respectif, tombent à l'intérieur d'une plage respective, et dans lequel le moyen de comparaison est sensible aux signaux de validation pour comparer la valeur d'un pixel d'image secondaire sélectionné par rapport aux limites correspondant à au moins l'une desdites plages.

22. Appareil selon la revendication 21, dans lequel le moyen de comparaison permet la comparaison de la valeur d'un pixel d'image secondaire avec les limites correspondant à une plage particulière seulement si le signal de validation respectif indique que les valeurs de tous les pixels d'image maître dans ledit voisinage respectif tombent à l'intérieur de cette plage particulière.

23. Appareil selon la revendication 21, dans lequel la série de signaux de validation comprend pour chaque pixel d'image maître sélectionné un signal numérique composé d'une pluralité d'éléments de signal dont chacun est associé avec une plage prédéterminée respective et a une première valeur de signal lorsque le pixel d'image maître respectif a une valeur située à l'intérieur de la plage respective et une seconde valeur de signal lorsque le pixel d'image maître respectif n'a pas une valeur située à l'intérieur de la plage respective.

24. Appareil selon la revendication 23, dans lequel le moyen de comparaison (67) est sensible auxdits éléments de signal pour permettre la comparaison de la valeur d'un pixel d'image secondaire par rapport à une plage lorsque l'élément de signal respectif a la première valeur de signal et pour interdire une telle comparaison lorsque ledit élément de signal respectif a la seconde valeur de signal.

25. Appareil selon l'une quelconque des revendications 20 à 24 et comprenant de plus un moyen (3, 5) d'examen un objet pour fournir les pixels de l'image secondaire.

26. Appareil selon la revendication 24, dans lequel l'objet est l'une d'une succession de feuilles qui sont soit distinctes soit sous forme continue et le moyen d'examen est agencé pour effectuer l'examen de manière synchronisée avec la présentation des feuilles.

**Patentansprüche**

1. Verfahren zur Darstellung eines aus Pixeln zusammengesetzten Bildes in Signalform, wobei für jedes aus einer Vielzahl ausgewählter Pixel des Bildes eine Matrix definiert wird, die aus zugeordneten Pixeln in der Nachbarschaft des ausgewählten Pixels zusammengesetzt ist, ein erster Signalwert erzeugt wird, wenn alle zugeordneten Pixel einen Pixelwert innerhalb eines vorgegebenen Bereichs aufweisen und wobei ein zweiter Signalwert erzeugt wird, wenn zumindest eines der zugeordneten Pixel einen Pixelwert außerhalb des Bereichs aufweist, so daß eine Reihe von Signalelementen erhalten wird, von denen jedes den Signalwert der für ein ausgewähltes Pixel definierten Matrix angibt.

2. Verfahren nach Anspruch 1, wobei eine Anzahl von Reihen von Signalelementen entwickelt wird, in denen die Signalwerte in jeder Reihe entsprechend einem zugeordneten Bereich aus einer Anzahl von verschiedenen Bereichen von Pixelwerten bestimmt werden.

3. Verfahren nach Anspruch 2, wobei die Bereiche die gleichen für jedes gewählte Pixel sind.

4. Verfahren nach einem der vorstehenden Ansprüche, wobei die Signalwerte binär sind.

5. Verfahren nach einem der Ansprüche 1 bis 4, wobei das Verfahren reiteriert wird, um zumindest eine zweite Reihe von Signalelementen aus einer vorhergehenden Reihe zu entwickeln.

6. Verfahren zur Entwicklung eines Signalmodells eines aus Pixeln aufgebauten Bildes, wobei jedes Pixel einen Pixelwert aufweist und wobei eine Vielzahl von verschiedenen Bereichen für den Pixelwert definiert wird, für jedes ausgewählte Pixel eine Matrix aus Pixeln in der Nachbarschaft des auswählten Pixels definiert wird, der Wert für jedes ausgewählte Pixel gegen zumindest einen der Vielzahl der Bereiche geprüft wird, und in Abhängigkeit von jedem ausgewählten Pixel und in Abhängigkeit von jedem der Bereiche ein erster Signalwert aufgestellt wird, falls alle Pixel in der zugeordneten Matrix Pixelwerte innerhalb des Bereiches aufweisen, und ein zweiter Signalwert aufgestellt wird, falls zumindest eines der Pixel in der zugeordneten Matrix einen Pixelwert außerhalb des Bereichs aufweist, sodaß eine Vielzahl von Reihen von Signalelementen erzeugt wird, in denen jede Reihe für einen zugeordneten Bereich der Bereiche aufgestellt wird, und jeweils eine Anzahl von Signalelementen umfaßt, von denen jeder den für die für ein zugeordnetes, ausgewähltes Pixel definierte Matrix bestimmten Signalwert hat.

7. Verfahren nach Anspruch 6, wobei der Pixelwert die Helligkeit wiedergibt und sich die Bereiche in Kombination über einen kompletten Bereich von Helligkeitswerten sich erstreckt.

8. Verfahren nach Anspruch 7, wobei die Helligkeitswerte in Grauskalenwerten ausgedrückt sind.

9. Verfahren nach einem der Ansprüche 6 bis 8, wobei die Bereiche überlappen.

10. Verfahren nach einem der Ansprüche 6 bis 9, wobei zur Erzeugung der Pixel eine Vorlage abgetastet wird.

11. Verfahren zum Vergleichen eines Sekundärbildes aus Sekundärbildpixeln mit einem Hauptbild, das durch Hauptbildpixel dargestellt ist, wobei für jedes ausgewählte Hauptbildpixel ein vorgegebener Bereich von Pixelwerten definiert wird, für jedes ausgewählte Hauptbildpixel ein Torsignal erzeugt wird, das anzeigt, ob die Werte aller Hauptbildpixel in einer zugeordneten, definierten Nachbarschaft des ausgewählten Hauptbildpixels innerhalb dieses Bereichs fallen, und wobei unter der Steuerung des Torsignals der Pixelwert eines Sekundärbildpixels bezüglich Grenzen, die dem Bereich entsprechen, geprüft wird.

12. Verfahren nach Anspruch 11, wobei ferner eine Vielzahl von unterschiedlichen Bereichen von Werten des Pixels definiert werden, für jeden der Bereiche eine Reihe von Torsignalen erzeugt werden, von denen jedes angibt, ob die Werte aller Hauptbildpixel in einer zugeordneten Nachbarschaft des zugeordneten, ausgewählten Hauptbildpixels in den zugeordneten Bereich fallen und wobei unter der Steuerung der Torsignale die Werte der Sekundärbildpixel bezüglich Grenzen geprüft werden, die zumindest einem der Bereiche entsprechen.

13. Verfahren nach Anspruch 12, wobei die Torsignale binär sind.

14. Verfahren nach Anspruch 12 oder 13, wobei ein Vergleich der Werte der Sekundärbildpixel mit Grenzen, die einem speziellen Bereich entsprechen, nur dann erlaubt wird, falls das zugeordnete Torsignal anzeigt, daß die Werte aller Hauptbildpixel in der zugeordneten Nachbarschaft innerhalb dieses speziellen Bereich fallen.

15. Verfahren nach einem der Ansprüche 12 bis 14, wobei die Pixelwerte die Helligkeit angeben und die Bereiche in Kombination sich über einen kompletten Bereich von einer definierten Nullhelligkeit zu einer definierten maximalen Helligkeit erstrecken.

16. Verfahren nach einem der Ansprüche 12 bis 15, wobei zumindest einige der Bereich überlappen.

17. Verfahren nach einem der Ansprüche 12 bis 16, wobei die Steuerung der Prüfung jedes ausgewählten Sekundärpixels für jeden der zugeordneten Bereiche parallel durchgeführt wird.

18. Verfahren nach einem der Ansprüche 12 bis 17, wobei das Verfahren nacheinander für jedes einer Vielzahl von Objekten durchgeführt wird, von denen jedes abgetastet wirrd, um ein zugeordnetes Sekundärbild zu erzeugen, synchron mit der Erzeugung der Objekte.

19. Verfahren nach Anspruch 18, wobei die Objekte in Blattform entweder separat oder in Form einer kontinuierlichen Bahn vorliegen.

20. Gerät zum Vergleich eines Sekundärbildes aus Sekundärbildpixeln mit einem Hauptbild, das durch Hauptbildpixel repräsentiert wird mit: einer Einrichtung (11) die eine Signaldarstellung erzeugt, die für jedes ausgewählte Hauptbildpixel angibt, ob die Werte aller Hauptbildpixel in einer zugeordneten, definierten NNachbarschaft des ausgewählten Hauptbildpixels innerhalb eines definierten Bereichs fallen, und mit Vergleichsmitteln (67) zum Überprüfen der Werte eines Sekundärbildpixels bezüglich Grenzen, die dem Bereich entsprechen.

21. Gerät nach Anspruch 20, wobei die Signaldarstellung Reihen von Torsignalen umfaßt, von denen jedes angibt, ob der Wert aller Hauptbildpixel in einer zugeordneten Nachbarschaft eines zugeordneten, ausgewählten Hauptbildpixels innerhalb eines zugeordneten Bereichs fallen, und wobei die Vergleichseinrichtung abhängig von den Torsignalen ist, um die Werte der ausgewählten Sekundärbildpixel bezüglich Grenzen zu überprüfen, die zumindest einem der Bereiche entsprechen.

22. Gerät nach Anspruch 21, wobei die Vergleichseinrichtung den Vergleich des Wertes eines Sekundärbildpixels mit Grenzen, die einem speziellen Bereich entsprechen, nur dann ermöglicht, falls das zugeordnete Torsignal anzeigt, daß die Werte aller Hauptbildpixel in der zugeordneten Nachbarschaft innerhalb dieses speziellen Bereiches fallen.

23. Gerät nach Anspruch 21, wobei die Reihe von Torsignalen für jedes ausgewählte Hauptbildpixel ein Digitalsignal aufweist, das aus einer Anzahl von Signalelementen zusammengesetzt ist, von denen jedes einem entsprechenden vorgegebenen Bereich zugeordnet ist und einen ersten Signalwert aufweist, wenn das zugeordnete Hauptbildpixel einen Wert innerhalb des zugeordneten Bereichs hat, und einen zweiten Signalwert aufweist, wenn das zugeordnete Hauptbildpixel einen Wert innerhalb des zugeordneten Bereichs nicht aufweist.

24. Gerät nach Anspruch 23, wobei die Vergleichseinrichtung (67) auf die Signalelemente anspricht, um den Vergleich des Wertes eines Sekundärbildpixels bezüglich eines Bereichs zuzulassen, wenn das zugeordnete Signalelement einen ersten Signalwert aufweist, und einen solchen Vergleich zu verhindern, wenn das zugeordnete Signalelement einen zweiten Signalwert aufweist.

25. Gerät nach einem der Ansprüche 20 bis 24, ferner mit einer Einrichtung (3, 5) zum Abtasten eines Objektes zur Erzeugung der Pixel des Sekundärbildes.

26. Gerät nach Anspruch 24, wobei das Objekt eines aus einer Folge von Blättern ist, die entweder separat oder in kontinuierlicher Form vorliegt, und wobei die Abtasteinrichtung so ausgebildet ist, daß sie das Abtasten synchron mit der Präsentation der Blätter durchführt.

FIG. 1.

ILLUMINATION

LINE SCAN CAMERA 5

SHAFT ENCODER

CONTROL UNIT 7

FIG. 2.

8

3

10

9

FIG. 3.

Xm

$x_1$ $x_2$ $x_3$ $x_4$ $x_5$

$y_1$

$y_2$

$Y_n$ $y_3$

$y_4$

$y_5$

## FIG. 4A.

| 1 | 1 | 1 | 1 | 1 |
|---|---|---|---|---|
| 1 | 1 | 1 | 1 | 1 |
| 1 | 1 | X | 1 | 1 |
| 1 | 1 | 1 | 1 | 1 |
| 1 | 1 | 1 | 1 | 1 |

## FIG. 4B.

| 1 | 1 | 1 | 1 | 1 | 1 | 1 |
|---|---|---|---|---|---|---|
| 1 | 1 | 1 | X | 1 | 1 | 1 |
| 1 | 1 | 1 | 1 | 1 | 1 | 1 |

## FIG. 4C.

| 0 | 0 | 0 | 0 | 1 | 0 | 0 | 0 | 0 |
|---|---|---|---|---|---|---|---|---|
| 0 | 0 | 1 | 1 | 1 | 1 | 1 | 0 | 0 |
| 0 | 1 | 1 | 1 | 1 | 1 | 1 | 1 | 0 |
| 0 | 1 | 1 | 1 | 1 | 1 | 1 | 1 | 0 |
| 1 | 1 | 1 | 1 | X | 1 | 1 | 1 | 1 |
| 0 | 1 | 1 | 1 | 1 | 1 | 1 | 1 | 0 |
| 0 | 1 | 1 | 1 | 1 | 1 | 1 | 1 | 0 |
| 0 | 0 | 1 | 1 | 1 | 1 | 1 | 0 | 0 |
| 0 | 0 | 0 | 0 | 1 | 0 | 0 | 0 | 0 |

## FIG. 5.

55 → 0
54 → 1
53 → 1
52 → 0
51 →

| 0 | 0 | 1 | 1 | 1 | 1 | 1 | 0 | 0 |
|---|---|---|---|---|---|---|---|---|
| 0 | 1 | 0 | 0 | 1 | 1 | 1 | 0 | 0 |
| 0 | 1 | 0 | 0 | 1 | 1 | 1 | 1 | 1 |
| 1 | 0 | 1 | 1 | 1 | 1 | 1 | 0 | 0 |
| 1 | 0 | 0 | 0 | 1 | 0 | 1 | 0 | 0 |
| 1 | 0 | 0 | 0 | 1 | 0 | 0 | 1 | 1 |
| 1 | 0 | 0 | 0 | 1 | 0 | 0 | 1 | 1 |
| 0 | 1 | 1 | 1 | 0 | 0 | 0 | 0 | 0 |
| 0 | 1 | 1 | 1 | 0 | 0 | 0 | 0 | 0 |
| 0 | 1 | 1 | 1 | 0 | 1 | 1 | 1 | 1 |

P

EP 0 165 734 B1

LOAD RAM

L/S CAMERA — 5

L/S CONTROL — 7

L/S I/F — 61

F/S — 62

F/S — 63

F/S — 65

MATRIX STORE RAM OR ROM — 11

μP — 64 — SKEW

μP — 66 — POSITION

SHAFT ENCODER — 6

SYNCHRONISM CONTROL — 60

3 1

DISCREPANCY DETECTOR — 67

SPOIL DECISION CCT — 68

DOCUMENT MARKING / VERIFICATION SYSTEM OR LOGGING SYSTEM — 69

FIG. 6.

EP 0 165 734 B1

70

DATA HIGHWAY — n BITS WIDE

WORD REPRESENTING GREY SCALE VALUE OF PIXEL (X,Y)

UPPER LEVEL OF FIRST RANGE

LOWER LEVEL OF FIRST RANGE

FIRST MATRIX BIT (X,Y)

81

91

91a

UPPER LEVEL OF SECOND RANGE

LOWER LEVEL OF SECOND RANGE

ENABLE n-BIT COMPARATOR

ENABLE n-BIT COMPARATOR

71

71a

SECOND MATRIX BIT (X,Y)

82

92

92a

ENABLE

ENABLE

LOGIC CIRCUIT

72

72a

101

LOGIC CIRCUIT

102

FIG. 7.

FIG. 8.

SCAN OBJECT — A

DIGITISE & STORE — B

STORE COMPLETE IMAGE — C

ANY SKEW? — D
NO
YES

SKEW TRANSLATION — E

STORE STRAIGHTENED IMAGE — F

ANY POSITIONAL CHANGE? — G
NO
YES

POSITIONAL TRANSLATION — H

STORE CORRECTLY POSITIONED IMAGE — J

ANY DISCREPANCIES? — K
NO
YES

COUNT/MAP DISCREPANCIES — L

A SPOIL? — M
NO
YES

MARK — N

LOG — P

20